# EUROPÄISCHE PATENTSCHRIFT

(11) **EP 2 218 951 B1**
(45) Veröffentlichungstag und Bekanntmachung des Hinweises auf die Patenterteilung: **10.05.2017**
(21) Anmeldenummer: 10001186.5
(22) Anmeldetag: 05.02.2010
(51) Int. Cl.: F16K 35/04

(54) **Sicherungsvorrichtung für ein Ventil**
Safety device for a valve
Dispositif de sécurisation pour une soupape

(30) Priorität: 05.02.2009 DE 102009007688
(43) Veröffentlichungstag der Anmeldung: 18.08.2010
(73) Patentinhaber: KNORR-BREMSE Systeme für Nutzfahrzeuge GmbH, 80809 München (DE)
(72) Erfinder: Koncz, László, 6000 Kecskemét (HU); Sovágó, Szabolcs, 6000 Kecskemét (HU); Muser, Michael, 85276 Pfaffenhofen (DE)
(74) Vertreter: Schönmann, Kurt

(56) Entgegenhaltungen:
- DE-A1- 2 407 136
- GB-A- 899 424
- JP-A- 4 337 178
- US-A- 4 185 661

## Beschreibung

Die Erfindung betrifft eine Sicherungsvorrichtung für ein Ventil, das ein Betätigungsteil zur Betätigung und einen Körper umfasst, wobei eine relativ zu dem Körper in einer Betätigungsrichtung gerichtete Bewegung des Betätigungsteils eine Betätigung eines Ventils bewirken kann; wobei die Sicherungsvorrichtung ein erstes Sicherungsteil und ein mit dem ersten Sicherungsteil zusammenwirkendes zweites Sicherungsteil umfasst, wobei das erste Sicherungsteil mit dem Betätigungsteil mechanisch verbunden ist und das zweite Sicherungsteil mit dem Ventilkörper mechanisch verbunden ist; wobei die Sicherungsvorrichtung eine von einer Betätigungsstellung des Betätigungsteils abhängige Mit- oder Gegenkraft erzeugt, die in die Betätigungsrichtung bzw. entgegen der Betätigungsrichtung gerichtet ist; wobei die Mit- oder Gegenkraft mittels einer kraftvermittelnden Vorrichtung mittels einer Ausgangskraft erzeugt wird; wobei die Ausgangskraft im Wesentlichen quer zu einer Radialrichtung der Hauptachse der Betätigungsrichtung gerichtet ist; wobei die Ausgangskraft in Bezug zu der Hauptachse der Betätigungsrichtung im Wesentlichen in einer tangentialen Richtung gerichtet ist; wobei der Körper mit einem rohrförmigen Lagerteil fest verbunden ist.

Außerdem betrifft die Erfindung eine Ventilanordnung, die ein Ventil umfasst.

Des Weiteren betrifft die Erfindung ein Verfahren zur Sicherung eines Ventils, wobei das Verfahren folgende Schritte umfasst: Bewirken einer Betätigung des Ventils mittels einer Bewegung eines Betätigungsteils des Ventils, die in einer Betätigungsrichtung gerichtet ist; Erzeugen einer von einer Betätigungsstellung des Betätigungsteils abhängigen Mit- oder Gegenkraft, wobei die Mit- bzw. Gegenkraft in der Betätigungsrichtung bzw. entgegen der Betätigungsrichtung gerichtet ist und mittels einer Ausgangskraft erzeugt wird; wobei die Ausgangskraft im Wesentlichen quer zu einer Radialrichtung der Hauptachse der Betätigungsrichtung gerichtet ist; wobei die Ausgangskraft in Bezug zu der Hauptachse der Betätigungsrichtung im Wesentlichen in einer tangentialen Richtung gerichtet ist; wobei der Ventilkörper mit einem rohrförmigen Lagerteil fest verbunden ist.

Die EP 1 918 622 A2 beschreibt eine Vorrichtung zum Entlüften eines Fahrzeuggetriebes mit einer Entlüfterhülse, einem O-Ring und einem Entlüfterstopfen. An einer Stirnseite des Entlüfterstopfens ist ein Abschlussdeckel befestigt und auf der zylindrischen Umfangsfläche des Entlüfterstopfens sind zwei Arretierungsstifte angeordnet. In der Entlüfterhülse sind zwei in Axialrichtung verlaufende Schlitze mit jeweils zwei Schlitzerweiterungen vorgesehen. Die Entlüfterhülse ist mit ihrem Hülsenabschnitt in ein Durchgangsloch einer Wandung eines Getriebegehäuses eingesteckt. Beim Bewegen des Entlüfterstopfens in der Entlüfterhülse werden die Arretierungsstifte verschoben und dehnen die Entlüfterhülse aufgrund eines relativ schalen Schlitzabschnitts zwischen den Schlitzerweiterungen des Schlitzes. Wenn sich die Arretierungsstifte im Bereich einer der beiden Paare von Schlitzerweiterungen befinden, rastieren die Arretierungsstifte mit den Schlitzerweiterungen.

Die DE 24 07 136 A1 beschreibt einen Schnitt durch ein Ventilgehäuse am Ende eines Steuerkolbens eines Wegeventils. Das Wegeventil umfasst einen Rastmechanismus (Raste) mit einer Kugel, die mit mindestens einer umlaufenden Nut im Steuerkolben zusammenwirkt. Mit der umlaufenden Nut ist eine Schaltstellung des Steuerkolbens festlegt. Die Kugel ist in einer Hülse angeordnet und mittels einer Feder, die zwei Windungen aufweist, in Richtung der umlaufenden Nuten des Steuerkolbenendes belastet.

Die US 4,185,661 A beschreibt ein Rastmittel für ein Magnetventil.

Die GB 899 424 A beschreibt einen Rastmechanismus für eine Ventilbedienung.

Die JP 4 337178 A beschreibt eine federartig nachgiebige Haltehülse mit Nuten. In Abhängigkeit von der Schaltstellung greift eine Kugel, die ins Ende eines Schiebers eingebettet ist, in eine der Nuten ein. Die Nuten sind in Bezug auf die Hauptachse des Schiebers und der Haltehülse tangential umlaufend.

In etlichen Anwendungsbereichen - beispielsweise im Fahrzeugbau - werden Sicherungsvorrichtungen für Ventile mit mindestens zwei Ventilstellungen benötigt. Hierbei ist insbesondere bei manueller Betätigung mindestens eine der beiden Ventilstellungen so zu sichern, dass die mindestens eine Ventilstellung nicht versehentlich eingestellt wird und/oder nicht versehentlich verlassen wird. Um diese Art von Mono-, Bi- oder Multistabilität zu erreichen, erzeugen gattungsgemäße Sicherungsvorrichtungen für Ventile eine von einer Betätigungsstellung des Betätigungsteils abhängige Mit- oder Gegenkraft, die in der Betätigungsrichtung bzw. entgegen der Betätigungsrichtung gerichtet ist, wobei die Mit- oder Gegenkraft mittels einer kraftvermittelnden Vorrichtung mittels einer Ausgangskraft erzeugt wird. Allerdings haben konventionelle gattungsgemäße Sicherungsvorrichtungen den Nachteil, dass sie eine Ausgangskraft erzeugen, die in Bezug auf eine Betätigungsachse eines Schiebers des Ventils radial gerichtet ist. Hierdurch entsteht eine für die Betätigung des Schiebers unerwünschte Beeinflussung einer Standreibung im Lager des Schiebers.

Der Erfindung liegt die Aufgabe zugrunde, eine Vorrichtung und ein entsprechendes Verfahren bereitzustellen, die bzw. das - im Vergleich zur konventionellen Technik - einen Krafteinfluss des Sicherungsmechanismus auf den übrigen Betätigungsmechanismus des Ventils möglichst weitgehend vermeidet, insoweit es sich bei dem Krafteinfluss nicht um die für die Mono-, Bi- oder Multistabilität beabsichtigte Mit- oder Gegenkraft in Betätigungsrichtung bzw. entgegen der Betätigungsrichtung handelt.

Diese Aufgabe wird mit den Merkmalen der unabhängigen Ansprüche gelöst. Vorteilhafte Ausgestaltungen und Weiterbildungen der Erfindungen ergeben sich aus den abhängigen Ansprüchen.

Unter einem ersten Aspekt baut die vorliegende Erfindung auf einer gattungsgemäßen Sicherungsvorrichtung dadurch auf, dass das erste Sicherungsteil außerhalb des rohrförmigen Lagerteils angeordnet ist.

Die Ausgangskraft ist in Bezug zu der Hauptachse der Betätigungsrichtung im Wesentlichen in einer tangentialen Richtung gerichtet. Damit ist keine Kraftkomponente der Ausgangskraft mehr in Betätigungsrichtung oder Radialrichtung vorhanden, so dass die Kopplung zwischen Ausgangskraft und Betätigungskraft nur noch durch die kraftvermittelnde Vorrichtung bestimmt wird.

Ebenfalls ist bevorzugt, wenn die Mit- bzw. Gegenkraft eine Reibungskraft, eine Scherkraft und/oder eine kulissenresultierende Kraft ist.

Eine besonders vorteilhafte Weiterbildung sieht vor, dass die Ausgangskraft eine Federkraft eines elastischen Teils der Sicherungsvorrichtung ist, wobei insbesondere das elastische Teil ein verformbares Materialteil und/oder eine Blattfeder und/oder eine Spiralfeder ist. Durch die Erzeugung der Ausgangskraft mittels eines passiven mechanischen Bauteils - wie einer Feder - steht die Ausgangskraft - im Gegensatz zu ebenso möglichen Alternativlösungen mit aktiven Bauteilen - permanent zur Verfügung.

Das elastische Teil kann an dem Betätigungsteil befestigt sein.

Ebenso ist es auch möglich, das elastische Teil an dem Ventilkörper zu befestigen.

Besonders bevorzugt ist es auch, wenn das elastische Teil mittels eines ersten und/oder zweiten Lagers einseitig bzw. zweiseitig gelagert ist. Bei zweiseitiger Lagerung ist eine Gefahr eines versehentlichen oder mutwilligen Abbrechens des elastischen Teils geringer als bei einer nur einseitigen Lagerung.

Insbesondere bevorzugt ist es, wenn das elastische Teil einstückig mit allen Komponenten seines ersten und/oder zweiten Lagers verbunden ist. Hierdurch kann ein Herstellungsaufwand verringert werden.

Auch kann vorgesehen sein, dass das elastische Teil einen Materialvorsprung zur Vermittlung der Mit- oder Gegenkraft aufweist. Dadurch kann eine durch das elastische Teil bereitgestellte Federkraft direkt und präzise in den Materialvorsprung eingeleitet werden.

Außerdem kann das erste und/oder das zweite Sicherungsteil einen Materialvorsprung zur Vermittlung der Mit- oder Gegenkraft aufweisen. Ein solcher Materialvorsprung ermöglicht Flanken zur Formung einer monoton veränderlichen Ausgangskraft in Abhängigkeit von einer Betätigungsstellung.

Darüber hinaus kann vorgesehen sein, dass die Sicherungsvorrichtung mindestens drei Betätigungsstufen aufweist, wobei eine der mindestens drei Betätigungsstufen ein Übergangsbereich ist, der beim Wechsel von einer ersten der drei Betätigungsstufen zu einer dritten der drei Betätigungsstufen durchfahren wird. Dadurch ist sozusagen eine hohe "Übersetzung" in dem Ventil möglich, so dass ein manueller oder maschineller Wechsel zwischen zwei Betriebsstellungen mit einem geringen Kraftaufwand erfolgen kann.

Ferner ist es möglich, dass die Sicherungsvorrichtung in dem Übergangsbereich nicht selbsthaltend ist. Dadurch wird in dem Übergangsbereich eine zusätzliche Kraft vermieden, die einen Wechsel zwischen zwei Betriebsstellungen behindern würde.

Außerdem kann vorgesehen sein, dass das Durchfahren des Übergangsbereichs eine definierte Mindestbetätigungskraft erfordert. Beispielsweise wird durch eine Mindeststand- oder Mindestgleitreibung ein undefiniertes Hin- und Hergleiten der Ventilbetätigung vermieden.

Außerdem baut die vorliegende Erfindung auf einer Ventilanordnung, die ein Ventil umfasst, dadurch auf, dass die Ventilanordnung zur Sicherung einer Betätigung des Ventils eine der vorbeschriebenen Sicherungsvorrichtungen umfasst.

Des Weiteren baut die vorliegende Erfindung auf einem gattungsgemäßen Verfahren zur Sicherung eines Ventils dadurch auf, dass das erste Sicherungsteil außerhalb des rohrförmigen Lagerteils angeordnet ist.

Die Erfindung wird nun mit Bezug auf die begleitenden Zeichnungen anhand besonders bevorzugter Ausführungsformen beispielhaft erläutert.

Es zeigen:
- Figur 1: eine perspektivische Ansicht eines Park- und Shuntventils;
- Figur 2: eine perspektivische Ansicht eines Schnittes durch das Parkventil des Park- und Shuntventils, wobei sich der Parkknopf des Parkventils in einer eingedrückten Stellung befindet und das Parkventil in einer ersten Ventilstellung;
- Figur 3: eine perspektivische Detailansicht im Bereich des Parkknopfes des Parkventils, wobei sich der Parkknopf des Parkventils in der eingedrückten Stellung befindet;
- Figur 4: eine noch detaillierte perspektivische Detailansicht im Bereich von Haltenasen, wobei sich der Parkknopf des Parkventils in der eingedrückten Stellung befindet;
- Figur 5: eine perspektivische Ansicht eines Schnittes durch das Parkventil des Park- und Shuntventils, wobei sich der Parkknopf des Parkventils in einer herausgezogenen Stellung befindet und das Parkventil in einer zweiten Ventilstellung;
- Figur 6: eine perspektivische Detailansicht im Bereich des Parkknopfes des Parkventils, wobei sich der Parkknopf des Parkventils in der herausgezogenen Stellung befindet; und
- Figur 7: eine noch detaillierte perspektivische Detailansicht im Bereich von Haltenasen, wobei sich der Parkknopf des Parkventils in der herausgezogenen Stellung befindet.

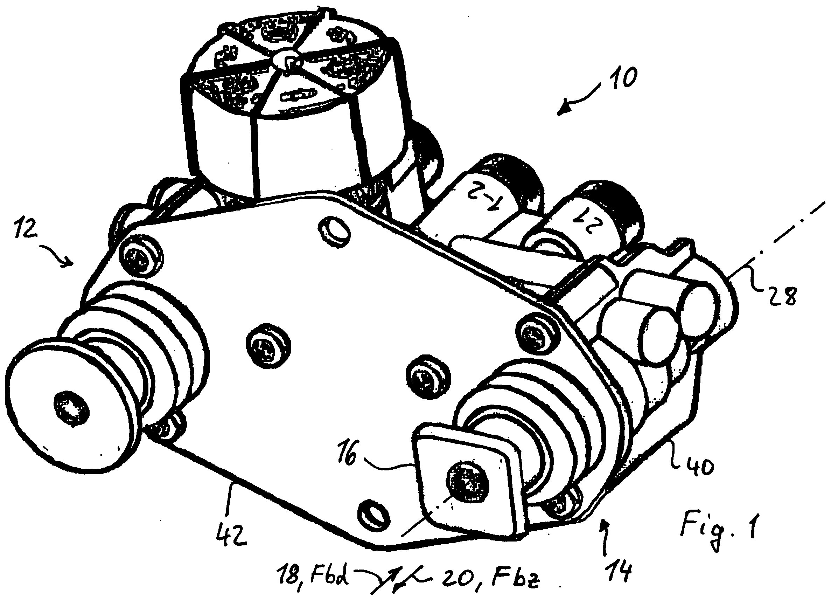

Zur Übersicht zeigt Fig. 1 ein Park- und Shuntventil 10, wobei das Shuntventil 12 auf der linken Seite und das Parkventil 14 auf der rechten Seite der Figur dargestellt ist. Eine Betätigung des Parkventils 14 geschieht typischerweise wie folgt: Mittels Hineindrücken eines viereckigen Betätigungsknopfs 16 des Parkventils 14 in einer dem Ventil 14 zugewandten Richtung 18 wird das Parkventil 14 in eine erste Ventilstellung versetzt. Mittels Herausziehen des viereckigen Betätigungsknopfs 16 in eine vom Ventil abgewandte Richtung 20 wird das Ventil 14 in eine zweite Ventilstellung versetzt. Die zweite Ventilstellung (Betätigungsknopf 16 herausgezogen) ist typischerweise eine Parkstellung (Betätigungsknopf 16 herausgezogen) des Parkventils 14. Die erste Ventilstellung stellt dann eine Lösestellung des Parkventils 14 dar. Aus technischer Sicht ist aber auch die umgekehrte Wirkungsweise möglich, wobei dann die zweite Ventilstellung die Lösestellung des Parkventils 14 darstellt, und die erste Ventilstellung die Parkstellung.

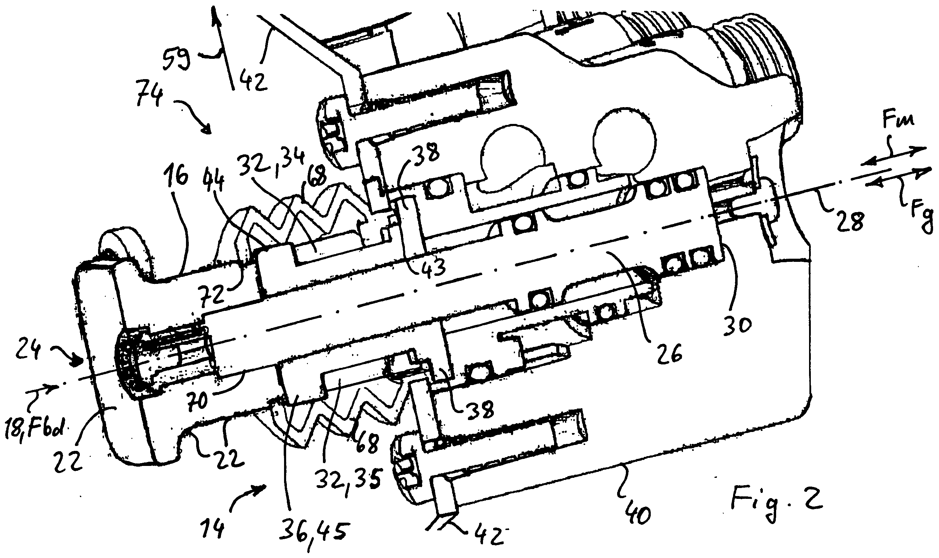

Die Figur 2 zeigt eine perspektivische Ansicht eines Schnittes durch das Parkventil 14, während der Parkknopf 16 des Parkventils 14 eingedrückt ist. Der Parkknopf 16 weist neben Griffbereichen 22 ein Befestigungsmittel 24 für einen Schieber 26 des Parkventils 14 auf. Durch Eindrücken des Parkknopfs 16 kann der Schieber 26 in Richtung 18 einer Hauptachse 28 des Schiebers 26 bis zu einem ersten inneren Anschlag 30 verschoben werden. Der Schieber 26 - und damit auch das Parkventil 14 - befinden sich dann in der Lösestellung. Ein der Betätigungsseite des Parkknopfes 16 abgewandter Bereich 32 ist rohrförmig ausgebildet und weist zwei Führungsschlitze 34, 35 auf, die zueinander symmetrisch zur Hauptachse 28 angeordnet sind und beide parallel zur Hauptachse 28 verlaufen. Der rohrförmig ausgebildete Bereich 32 des Parkknopfs 16 ist auf einem im Wesentlichen rohrförmigen Lagerteil 36 hülsenartig aufgesteckt und wird in Richtung 18, 20 der Hauptachse 28 des Schiebers 26 geführt. Also bilden das rohrförmige Lagerteil 36 und der rohrförmig ausgebildete Bereich 32 des Parkknopfs 16 ein Schiebelager. Das rohrförmige Lagerteil 36 kann einen Flansch 38 aufweisen. Der Flansch 38 und damit das rohrförmige Lagerteil 36 sind mittels Formschluss zwischen einem Ventilkörper 40 und einer Frontplatte 42 des Parkventils 14 mit dem Ventilkörper 40 fest verbunden. Besonders bevorzugt ist es, wenn zwischen dem rohrförmigen Lagerteil 36 und der Frontplatte 42 mittels Formschluss ein Flansch 43 des weiter unten beschriebenen Balgs 68 befestigt ist.

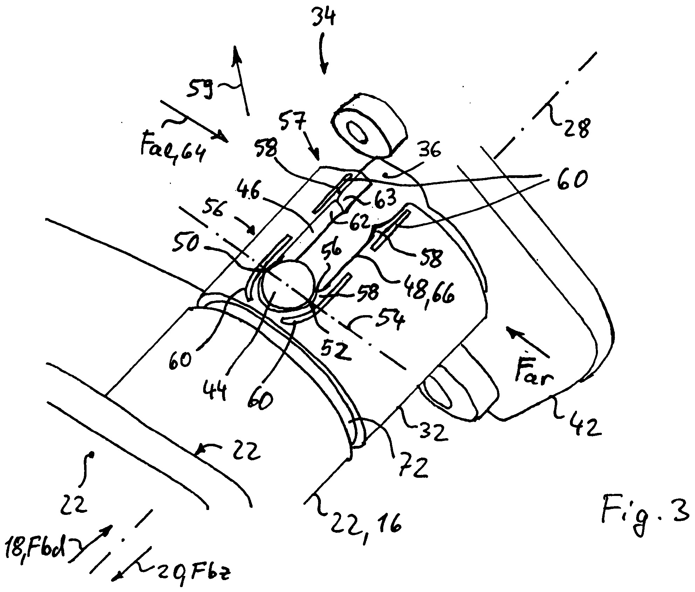

Figur 3 zeigt eine perspektivische Detailansicht im Bereich des Parkknopfes 16 des Parkventils 14 in der eingedrückten Stellung.

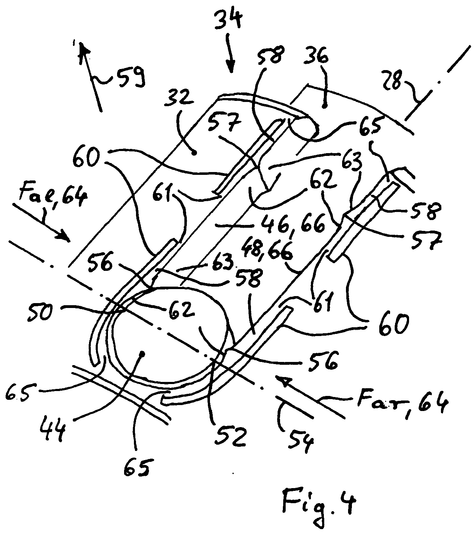

Figur 4 zeigt dazu eine noch detaillierte perspektivische Detailansicht im Bereich von Haltenasen 56, 57. Das rohrförmige Lagerteil 36, weist zwei symmetrisch zur Hauptachse 28 angeordnete Nocken 44, 45 auf, von denen eine erste 44 in einem ersten 34 der beiden Führungsschlitzen 34, 35 und die andere 45 in einem zweiten 35 der beiden Führungsschlitze 34, 35 angeordnet ist. Zwei zueinander gegenüberliegende Wandungen 46, 48 des ersten 34 der beiden Führungsschlitze 34, 35 umgreifen also die erste 44 der beiden Nocken 44, 45, die an dem rohrförmigen Lagerteil 36 angeordnet sind. Entsprechendes gilt für die zweite 45 der beiden Nocken 44, 45 und den zweiten 35 der beiden Führungsschlitze 34, 35. Zur Betätigung des Parkknopfes 16 wird dieser in Axialrichtung 18, 20 verschoben, wobei sich die jeweiligen Wandungen 46, 48 des jeweiligen Führungsschlitzes 34, 35, die die jeweilige Nocke 44, 45 zangenartig umgreifen, entlang der Nocke 44, 45 bewegen, so dass im Laufe der Schiebebewegung fortlaufend ein anderer Bereich des jeweiligen Führungsschlitzes 34, 35 einer dicksten Stelle 50, 52 der Nocke 44 bzw. 45 am nächsten ist. Die dickste Stelle 50, 52 der Nocke 44, 45 befindet sich bei der in der Figur gezeigten Nocke 44 im Bereich einer tangential zur Hauptachse 28 verlaufenden (gedachten) Durchmesserlinie 54 der Nocke 44. Mindestens eine der beiden Führungswandungen 46, 48 mindestens eines der beiden Führungsschlitze 34, 35 weist mindestens eine kurvenartig ausgebildete Haltenase 56, 57 auf. Ein Abstand zwischen der jeweiligen Haltenase 56, 57 und der Führungswand 46, 48, die der jeweiligen Haltenase 56, 57 gegenüberliegt, ist so bemessen, dass beim Verschieben des Parkknopfes 16 die Nocke 44, 45 und/oder die Haltenase 56, 57 und/oder ein Material des rohrförmigen Bereichs 32 des Parkknopfes 16 aufgrund eines Platzmangels druckfederartig verformt wird. Dazu hat das Material der Nocke 44, 45 beziehungsweise der Haltenase 56, 57, 57 beziehungsweise das Material des rohrförmigen Bereichs 32 des Parkknopfes 16 eine (vorbestimmte) Elastizität, d.h. eine reversible Verformbarkeit. Das druckfederartig verformbare Teil (wie Nocke 44, Haltenase 56, 57, Material des rohrförmigen Bereichs 32 des Parkknopfes 16) wird hier als ausgangskrafterzeugende Vorrichtung 58 bezeichnet.

Im in der Figur dargestellten Ausführungsbeispiel ist im rohrförmig ausgebildeten Bereich 32 des Parkknopfs 16 (in Richtung der unten beschriebenen Ausgangskraft) hinter jeder Haltenase 56, 57 eine Ausnehmung 60 angeordnet, wodurch ein dazwischenliegender Bereich 58 die Funktion einer Blattfeder 58 ausweist, welches eine Ausgangskraft Fal, Far erzeugt. Die Ausgangskraft Fal, Far ist im Wesentlichen quer, und zwar vorzugsweise senkrecht, zu einer Radialrichtung 59 der Hauptachse 28 der Betätigungsrichtung 18, 20 des Ventils 14 gerichtet. Die Blattfeder 58 ist mittels eines ersten 61 und/oder eines zweiten 65 Lagers mit dem rohrförmig ausgebildeten Teil 32 des Parkknopfs 16 verbunden, und zwar vorzugsweise einstückig.

Aufgrund des durch die Haltenase 56, 57 gebildeten Vorsprungs wird die ausgangskrafterzeugende Vorrichtung 58 dann besonders stark zusammengedrückt, wenn sich die dickste Stelle 50, 52 der Nocke 44 im Bereich der Haltenase 56, 57 befindet. In dieser Übergangsposition ist die Ausgangskraft Fal, Far der ausgangskrafterzeugenden Vorrichtung 58 am höchsten. Typischerweise weist eine jede Haltenase 56, 57 in Axialrichtung 18, 20 an ihren beiden Seiten je eine vordere 62 und eine hintere 63 schräge Flanke auf. Die schräge Flanke 62, 63 wird hier als kraftvermittelnde Vorrichtung 62, 63 bezeichnet, da sie aus einer in Axialrichtung 18, 20 gerichteten Betätigungskraft Fbd, Fbz die in Tangentialrichtung 64 gerichtete Ausgangskraft Fal, Far erzeugt. Sobald sich die Haltenase 56, 57 der Nocke 44 nähert, wird in der ausgangskrafterzeugenden Vorrichtung 58 eine Federkraft Fal, Far (Federspannung) aufgebaut. Bis zu dem Punkt, in dem die Federkraft Fal, Far ihr Maximum erreicht, wirkt die Federkraft Fal, Far mittels der kraftvermittelnden Vorrichtung 62, 63 der Betätigungskraft Fbd, Fbz entgegen. Somit erzeugt die kraftvermittelnde Vorrichtung 62, 63 aus der Ausgangskraft Fal, Far eine von einer Betätigungsstellung des Betätigungsteils 16 abhängige Mitkraft Fm bzw. Gegenkraft Fg, die ohne Reibung die Höhe von -Fbd bzw. -Fbz hätten. Die Richtung der Mitkraft Fm und der Gegenkraft Fg hängt also davon ab, ob sich die dickste Stelle 50, 52 der Nocke auf einer vorderen 62 oder einer hinteren 63 Flanke der Haltenase 56, 57 befindet. Eine Reibung zwischen dem ersten Sicherungsteil 32 und dem zweiten Sicherungsteil 44, 45 kann minimiert werden, indem die Haltenase 56, 57 und/oder die dickste Stelle 50, 52 der Nocke 44, 45 als drehbar gelagerte Rolle ausgebildet wird. Bei Fortsetzung der Betätigung in derselben Richtung 18, 20 wird die Haltenase 56, 57 durch die Nocke 44, 45 weniger weit zurückgedrängt; und die Federkraft Fal, Far kann sich deshalb wieder abbauen. In diesem Betätigungsabschnitt unterstützt die Federkraft Fal, Far mittels der kraftvermittelnden Vorrichtung 62, 63 die Betätigungskraft Fbd, Fbz. Um einen symmetrischen Aufbau mit symmetrischen Kräfteverhältnissen zu erzielen, sind die Haltenasen 56 bzw. 57 in den Führungsschlitzen 34, 35 vorzugsweise paarweise und vorzugsweise gegenüberliegend angeordnet. Um einen langen Übergangsbereich 66 zwischen beiden Ventilstellungen zu erhalten, weist mindestens einer der beiden Führungsschlitze 34, 35 ein erstes Haltenasenpaar 56 zur Sicherung der ersten Ventilstellung und ein zweites Haltenasenpaar 57 zur Sicherung der zweiten Ventilstellung auf. Zwischen den beiden Haltenasenpaaren 56, 57 befindet sich typischerweise ein Übergangsbereich 66, in dem die Führungswände 46, 48, das heißt der rohrförmig ausgebildete Bereich 32 des Parkknopfs 16, mit verhältnismäßig geringem Kraftaufwand entlang der Nocke 44 bzw. 45 bewegt werden können bzw. kann. Zwischen dem Parkknopf 16 und der Frontplatte 42 und/oder dem Ventilkörper 40 ist ein elastischer Balg 68 angeordnet, der das rohrförmige Lagerteil 36 und auch den rohrförmigen Bereich 32 großteils umhüllt. Der elastische Balg 68 ist auf einer ersten Seite mit der Frontplatte 42 und/oder dem Ventilkörper 40 verbunden und auf einer zweiten Seite mittels einer umlaufenden Haltenut 72 an dem Parkknopf 16 befestigt. Die Anordnung des elastischen Balgs 68 kann neben gestalterischen Gründen auch den Vorteil haben, dass damit eine Verschmutzung der in dem Balg 68 angeordneten Sicherungsvorrichtung 74 und/eine Verletzungsgefahr an der Sicherungsvorrichtung 74 verhindert werden. Der Balg 68 ist in der Lösestellung weitgehend zusammengefaltet und in der Parkstellung vergleichsweise weit auseinandergezogen. In dem in den Figuren gezeigten Ausführungsbeispiel befindet sich die erfindungsgemäße Sicherungsvorrichtung 74 in beiden Betätigungsstellungen sowie auch in allen Zwischenstellungen immer innerhalb des Balgs 68.

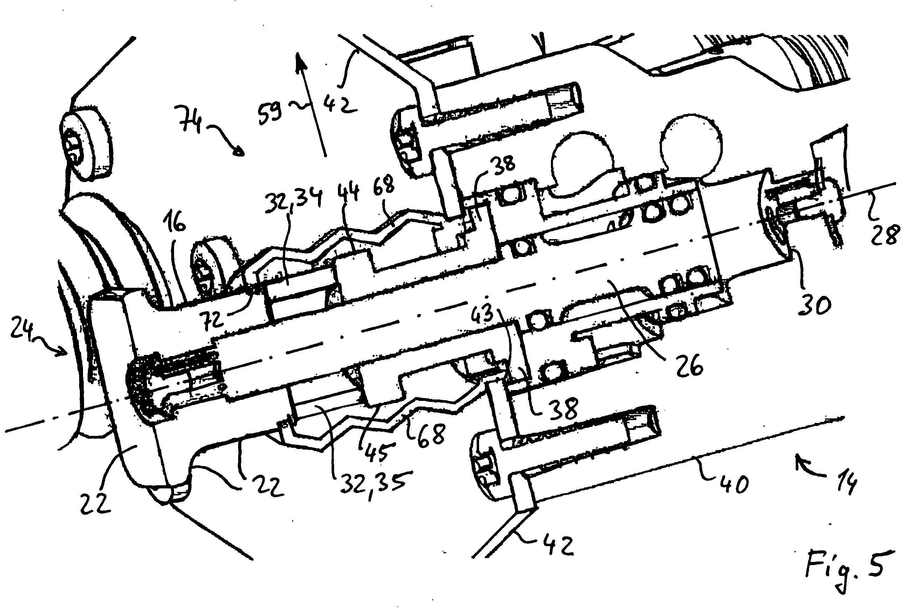

Figur 5 zeigt eine perspektivische Ansicht eines Schnittes durch das Parkventil 14 des Park- und Shuntventils 10 in einer herausgezogenen Stellung des Parkknopfes 16 des Parkventils 14.

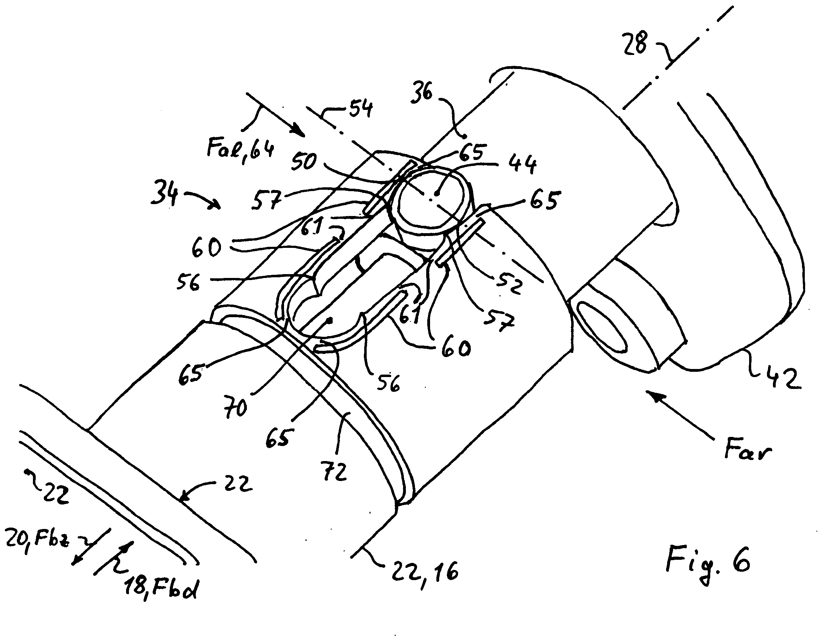

Figur 6 zeigt eine perspektivische Detailansicht im Bereich des Parkknopfes 16 des Parkventils 14 in der herausgezogenen Stellung.

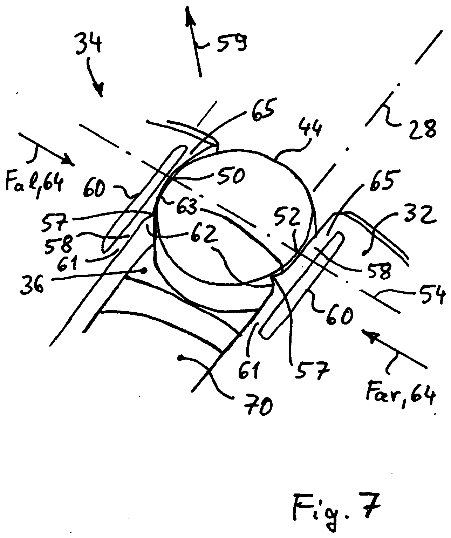

Figur 7 zeigt eine noch detaillierte perspektivische Detailansicht in der herausgezogenen Stellung des Parkknopfes 16 im Bereich von Haltenasen 56, 57.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, jedoch im Rahmen der Ansprüche.

### Bezugszeichenliste:

- 10: Park- und Shuntventil
- 12: Shuntventil
- 14: Parkventil
- 16: Parkknopf; Betätigungsknopf des Parkventils; Betätigungsteil
- 18: Betätigungsrichtung Parkknopf drücken
- 20: Betätigungsrichtung Parkknopf ziehen
- 22: Griffbereich
- 24: Befestigungsmittel
- 26: Schieber
- 28: Hauptachse des Parkventils
- 30: innerer Anschlag
- 32: rohrförmiger Bereich des Parkknopfs 16; erstes Sicherungsteil
- 34: oberer Führungsschlitz
- 35: unterer Führungsschlitz
- 36: rohrförmiges Lagerteil
- 38: Flansch
- 40: Körper
- 42: Frontplatte
- 43: Flansch des Balgs 68
- 44: obere Nocke; zweites Sicherungsteil
- 45: untere Nocke; zweites Sicherungsteil
- 46: gegenüberliegende Wandung
- 48: gegenüberliegende Wandung
- 50: dickste Stelle der Nocke
- 52: dickste Stelle der Nocke
- 54: Durchmesserlinie der Nocke 44
- 56: Haltenase des ersten Haltenasenpaars
- 57: Haltenase des zweiten Haltenasenpaars
- 58: Blattfeder; ausgangskrafterzeugende Vorrichtung
- 59: Radialrichtung 59 der Hauptachse 28
- 60: Ausnehmung
- 61: erstes Lager für Blattfeder 58
- 62: vordere kraftvermittelnde Vorrichtung; vordere Flanke der Haltenase 56, 57
- 63: hintere kraftvermittelnde Vorrichtung; hintere Flanke der Haltenase 56, 57
- 64: Tangentialrichtung zur Ventilhauptachse 28
- 65: zweites Lager für Blattfeder 58
- 66: Übergangsbereich
- 68: elastischer Balg
- 70: Betätigungsstange des Schiebers 26
- 72: umlaufende Haltenut
- 74: Sicherungsvorrichtung

## Patentansprüche

1. Sicherungsvorrichtung (74) für ein Ventil (14), das ein Betätigungsteil (16) zur Betätigung und einen Körper (40) umfasst, wobei eine relativ zu dem Körper (40) in einer Betätigungsrichtung (18, 20) gerichtete Bewegung des Betätigungsteils (16) eine Betätigung eines Ventils (14) bewirken kann;
- wobei die Sicherungsvorrichtung (74) ein erstes Sicherungsteil (32) und ein mit dem ersten Sicherungsteil (32) zusammenwirkendes zweites Sicherungsteil (44, 45) umfasst, wobei das erste Sicherungsteil (32) mit dem Betätigungsteil (16) mechanisch verbunden ist und das zweite Sicherungsteil (44, 45) mit dem Körper (40) mechanisch verbunden ist;
- wobei die Sicherungsvorrichtung (74) eine von einer Betätigungsstellung des Betätigungsteils (16) abhängige Mit- oder Gegenkraft (Fm, Fg) erzeugt, die in die Betätigungsrichtung (18, 20) bzw. entgegen der Betätigungsrichtung (18, 20) gerichtet ist;
- wobei die Mit- oder Gegenkraft (Fm, Fg) mittels einer kraftvermittelnden Vorrichtung (62, 63) mittels einer Ausgangskraft (Fal, Far) erzeugt wird;
- wobei die Ausgangskraft (Fal, Far) im Wesentlichen quer zu einer Radialrichtung (59) der Hauptachse (28) der Betätigungsrichtung (18, 20) gerichtet ist; wobei die Ausgangskraft (Fal, Far) in Bezug zu der Hauptachse (28) der Betätigungsrichtung (18, 20) im Wesentlichen in einer tangentialen Richtung (64) gerichtet ist; **dadurch gekennzeichnet, dass** der Körper (40) mit einem rohrförmigen Lagerteil (36) fest verbunden ist;
und das erste Sicherungsteil (32) außerhalb des rohrförmigen Lagerteils (36) angeordnet ist.

2. Sicherungsvorrichtung (74) gemäß Anspruch 1, **dadurch gekennzeichnet, dass** die Mit- bzw. Gegenkraft (Fm, Fg) eine Reibungskraft, eine Scherkraft und/oder eine kulissenresultierende Kraft ist.

3. Sicherungsvorrichtung (74) gemäß einem der Ansprüche 1 bis 2, **dadurch gekennzeichnet, dass** die Ausgangskraft (Fal, Far) eine Federkraft eines elastischen Teils (58) der Sicherungsvorrichtung (32) ist, wobei insbesondere das elastische Teil (58) ein verformbares Materialteil und/oder eine Blattfeder und/oder eine Spiralfeder ist.

4. Sicherungsvorrichtung (74) gemäß Anspruch 3, **dadurch gekennzeichnet, dass** das elastische Teil (58) an dem Betätigungsteil (16) befestigt ist.

5. Sicherungsvorrichtung (74) gemäß Anspruch 3 oder 4, **dadurch gekennzeichnet, dass** das elastische Teil (58) an dem Körpers (40) befestigt ist.

6. Sicherungsvorrichtung (74) gemäß einem der Ansprüche 3 bis 5 **dadurch gekennzeichnet, dass** das elastische Teil (58) mittels eines ersten (61) und/oder zweiten (65) Lagers einseitig bzw. zweiseitig gelagert ist.

7. Sicherungsvorrichtung (74) gemäß Anspruch 6, **dadurch gekennzeichnet, dass** das elastische Teil (58) einstückig mit seinem ersten (61) und/oder zweiten Lager (65) verbunden ist.

8. Sicherungsvorrichtung (74) gemäß einem der Ansprüche 3 bis 7, **dadurch gekennzeichnet, dass** das elastische Teil (58) einen Materialvorsprung (56, 57) zur Vermittlung der Mit- oder Gegenkraft (Fm, Fg) aufweist.

9. Sicherungsvorrichtung (74) gemäß einem der Ansprüche 1 bis 8 **dadurch gekennzeichnet, dass** das erste (32) und/oder das zweite (44, 45) Sicherungsteil einen Materialvorsprung (56, 57) zur Vermittlung der Mit- oder Gegenkraft (Fm, Fg) aufweist.

10. Sicherungsvorrichtung (74) gemäß einem der Ansprüche 1 bis 10, **dadurch gekennzeichnet, dass** die Sicherungsvorrichtung (74) mindestens drei Betätigungsstufen aufweist,
- wobei eine der mindestens drei Betätigungsstufen ein Übergangsbereich (66) ist, der beim Wechsel von einer ersten der drei Betätigungsstufen zu einer dritten der drei Betätigungsstufen durchfahren wird.

11. Sicherungsvorrichtung (74) gemäß Anspruch 10, **dadurch gekennzeichnet, dass** die Sicherungsvorrichtung in dem Übergangsbereich (66) nicht selbsthaltend ist.

12. Sicherungsvorrichtung (74) gemäß Anspruch 11, **dadurch gekennzeichnet, dass** das Durchfahren des Übergangsbereichs eine definierte Mindestbetätigungskraft erfordert.

13. Ventilanordnung (10) umfassend ein Ventil (14), **dadurch gekennzeichnet, dass** die Ventilanordnung (10) zur Sicherung einer Betätigung des Ventils (14) eine Sicherungsvorrichtung (74) gemäß einem der Ansprüche 1 bis 12 umfasst.

14. Verfahren zur Sicherung eines Ventils (14), wobei das Verfahren folgende Schritte umfasst:
- Bewirken einer Betätigung des Ventils (14) mittels einer Bewegung eines Betätigungsteils (16) des Ventils (14), die in einer Betätigungsrichtung (18, 20) gerichtet ist;
- Erzeugen einer von einer Betätigungsstellung des Betätigungsteils (16) abhängigen Mit- oder Gegenkraft (Fm, Fg), wobei die Mit- bzw. Gegenkraft (Fm, Fg) in der Betätigungsrichtung (18, 20) bzw. entgegen der Betätigungsrichtung (18, 20) gerichtet ist und mittels einer Ausgangskraft (Fal, Far) erzeugt wird; wobei die Ausgangskraft (Fal, Far) im Wesentlichen quer zu einer Radialrichtung (59) der Hauptachse (28) der Betätigungsrichtung (18, 20) gerichtet ist; wobei die Ausgangskraft (Fal, Far) in Bezug zu der Hauptachse (28) der Betätigungsrichtung (18, 20) im Wesentlichen in einer tangentialen Richtung (64) gerichtet ist; wobei der Ventilkörper (40) mit einem rohrförmigen Lagerteil (36) fest verbunden ist;
**dadurch gekennzeichnet, dass** das erste Sicherungsteil (32) außerhalb des rohrförmigen Lagerteils (36) angeordnet ist.

## Claims

1. Securing device (74) for a valve (14) comprising an actuating part (16) for actuation and a body (40), wherein a movement of the actuating part (16) relative to the body (40) in an actuating direction (18, 20) can effect an actuation of a valve (14),
- wherein the securing device (74) comprises a first securing part (32) and a second securing part (44, 45) acting together with the first securing part (32), wherein the first securing part (32) is mechanically connected to the actuating part (16) and the second securing part (44, 45) is mechanically connected to the body (40);
- wherein the securing device (74) generates, depending on an actuating position of the actuating part (16), a cooperative force or a counterforce (Fm, Fg) oriented in the actuating direction (18, 20) or against the actuating direction (18, 20);
- wherein the cooperative force or the counterforce (Fm, Fg) is generated by means of a force-procuring device (62, 63) by means of an output force (Fal, Far);
- wherein the output force (Fal, Far) is oriented substantially transversely to a radial direction (59) of the main axis (28) of the actuating direction (18, 20);
- wherein the output force (Fal, Far) is oriented substantially in a tangential direction (64) relative to the main axis (28) of the actuating direction (18, 20),
**characterised in that** the body (40) is permanently connected to a tubular bearing part (36) and the first securing part (32) is located outside the tubular bearing part (36).

2. Securing device (74) according to claim 1, **characterised in that** the cooperative force or the counterforce (Fm, Fg) is a friction force, a shear force and/or a link-resultant force.

3. Securing device (74) according to claim 1 or 2, **characterised in that** the output force (Fal, Far) is a spring force of an elastic part (58) of the securing device (32), the elastic part (58) being in particular a deformable material part and/or a leaf spring and/or a coil spring.

4. Securing device (74) according to claim 3, **characterised in that** the elastic part (58) is secured to the actuating part (16).

5. Securing device (74) according to claim 3 or 4, **characterised in that** the elastic part (58) is secured to the body (40).

6. Securing device (74) according to any of claims 3 to 5, **characterised in that** the elastic part (58) is bearing-mounted on one side and/or on both sides by means of a first (61) and/or a second (65) bearing.

7. Securing device (74) according to claim 6, **characterised in that** the elastic part (58) forms a single piece with its first (61) and/or second (65) bearing.

8. Securing device (74) according to any of claims 3 to 7, **characterised in that** the elastic part (58) has a material projection (56, 57) for conveying the cooperative force or the counterforce (Fm, Fg).

9. Securing device (74) according to any of claims 1 to 8, **characterised in that** the first (32) and/or the second (44, 45) securing part has/have a material projection (56, 57) for conveying the cooperative force or the counterforce (Fm, Fg).

10. Securing device (74) according to any of claims 1 to 9, **characterised in that** the securing device (74) has at least three actuation stages,
- wherein one of the at least three actuation stages is a transition region (66), which is passed through in the change from a first of the three actuation stages to a third of the three actuation stages.

11. Securing device (74) according to claim 10, **characterised in that** the securing device is not self-locking in the transition region (66).

12. Securing device (74) according to claim 11, **characterised in that** the passage through the transition region requires a defined minimum actuating force.

13. Valve assembly (10) comprising a valve (14), **characterised in that** the valve assembly (10) comprises a securing device (74) according to any of claims 1 to 12 for securing an actuation of the valve (14).

14. Method for securing a valve (14), the method comprising the following steps:
- causing an actuation of the valve (14) by means of a movement of an actuating part (16) of the valve (14) oriented in an actuating direction (18, 20);
- generating, depending on an actuating position of the actuating part (16), a cooperative force or a counterforce (Fm, Fg), wherein the cooperative force or a counterforce (Fm, Fg) is/are oriented in the actuating direction (18, 20) or against the actuating direction (18, 20) and is/are generated by means of an output force (Fal, Far); wherein the output force (Fal, Far) is oriented substantially transversely to a radial direction (59) of the main axis (28) of the actuating direction (18, 20); wherein the output force (Fal, Far) is oriented substantially in a tangential direction (64) relative to the main axis (28) of the actuating direction (18, 20); wherein the valve body (40) is permanently connected to a tubular bearing part (36);
**characterised in that** the first securing part (32) is located outside the tubular bearing part (36).

## Revendications

1. Dispositif (74) de sécurisation d'une soupape (14), laquelle comprend une partie (16) d'actionnement pour l'actionnement et un corps (40), dans lequel un mouvement, dirigé relativement au corps (40) dans un sens (18, 20) d'actionnement, de la partie (16) d'actionnement peut provoquer un actionnement d'une soupape (14);
- dans lequel le dispositif (74) de sécurisation comprend une première partie (32) de sécurisation et une deuxième partie (44, 45) de sécurisation coopérant avec la première partie (32) de sécurisation, la première partie (32) de sécurisation étant reliée mécaniquement à la partie (16) d'actionnement et la deuxième partie (44, 45) de sécurisation étant reliée mécaniquement au corps (40);
- dans lequel le dispositif (74) de sécurisation produit, en fonction de la position d'actionnement de la partie (16) d'actionnement, une force (Fm, Fg) de même sens ou de sens contraire, qui est dirigée dans le sens (18) (18, 20) d'actionnement ou dans le sens contraire au sens (18, 20) d'actionnement;
- dans lequel la force (Fm, Fg) de même sens ou de sens contraire est produite au moyen d'une force (Fal, Far) d'origine à l'aide d'un dispositif (62, 63) donnant une force;
- dans lequel la force (Fal, Far) d'origine est dirigée sensiblement transversalement à une direction (59) radiale de l'axe (28) principal du dispositif (18, 20) d'actionnement, la force (Fal, Far) d'origine étant dirigée, rapporté à l'axe (28) principal du dispositif (18, 20) d'actionnement, sensiblement dans une direction (64) tangentielle, **caractérisé en ce que** le corps (40) est relié fixement à une partie (36) de palier tubulaire et la première partie de sécurisation est disposée à l'extérieur de la partie (36) de palier tubulaire.

2. Dispositif (74) de sécurisation suivant la revendication 1, **caractérisé en ce que** la force (Fm, Fg) de même sens ou de sens contraire est une force de frottement, une force de cisaillement et/ou une force résultant d'un coulissement.

3. Dispositif (74) de sécurisation suivant l'une des revendications 1 à 2, **caractérisé en ce que** la force (Fal, Far) d'origine est une force de ressort d'une partie (58) élastique du dispositif (32) de sécurisation, la partie (58) élastique étant notamment une partie de matière déformable et/ou un ressort à lame et/ou un ressort spiral.

4. Dispositif (74) de sécurisation suivant la revendication 3, **caractérisé en ce que** la partie (58) élastique est fixée à la partie (16) d'actionnement.

5. Dispositif (74) de sécurisation suivant la revendication 3 ou 4, **caractérisé en ce que** la partie (58) élastique est fixée au corps (40).

6. Dispositif (74) de sécurisation suivant l'une des revendications 3 à 5, **caractérisé en ce que** la partie (58) élastique est montée d'un côté ou des deux côtés au moyen d'un premier (61) et/ou d'un deuxième palier (65).

7. Dispositif (74) de sécurisation suivant la revendication 6, **caractérisé en ce que** la partie (58) élastique est reliée d'une pièce avec son premier (61) et/ou son deuxième palier (65).

8. Dispositif (74) de sécurisation suivant l'une des revendications 3 à 7, **caractérisé en ce que** la partie (58) élastique a une saillie (56, 57) de matière pour donner la force (Fm, Fg) de même sens ou de sens contraire.

9. Dispositif (74) de sécurisation suivant l'une des revendications 1 à 8, **caractérisé en ce que** la première (32) et/ou la deuxième partie (44, 45) de sécurisation a une saillie (56, 57) de matière pour donner la force (Fm, Fg) de même sens ou de sens contraire.

10. Dispositif (74) de sécurisation suivant l'une des revendications 1 à 9, **caractérisé en ce que** le dispositif (74) de sécurisation a au moins trois paliers d'actionnement,
- dans lequel l'un des au moins trois paliers d'actionnement est une région (66) de transition qui est parcourue lors du passage d'un premier des trois paliers d'actionnement à un troisième des trois paliers d'actionnement.

11. Dispositif (74) de sécurisation suivant la revendication 10, **caractérisé en ce que** le dispositif (74) de sécurisation ne se maintient pas soi-même dans la région (66) de transition.

12. Dispositif (74) de sécurisation suivant la revendication 11, **caractérisé en ce que** la traversée de la région de transition exige une force d'actionnement minimum définie.

13. Agencement (10) de soupape comprenant une soupape (14) **caractérisé en ce que** l'agencement (10) de soupape comprend pour la sécurisation d'un actionnement de la soupape, un dispositif (74) de sécurisation suivant l'une revendications 1 à 12.

14. Procédé de sécurisation d'une soupape (14), le procédé comprenant les stades suivants:
- on provoque un actionnement de la soupape (14) au moyen d'un déplacement d'une partie (16) d'actionnement de la soupape (14), qui est dirigé dans un sens (18, 20) d'actionnement;
- on produit, en fonction de la position d'actionnement de la partie (16) d'actionnement, une force (Fm, Fg) de même sens ou de sens contraire, la force (Fm, Fg) de même sens ou de sens contraire étant dirigée dans le sens (18, 20) d'actionnement ou dans le sens contraire au sens (18, 20) d'actionnement et étant produite au moyen d'une force (Fal, Far) d'origine, la force (fal, Far) d'origine étant dirigée sensiblement transversalement à une direction (59) radiale de l'axe (28) principal du dispositif (18, 20) d'actionnement, la force (Fal, Far) d'origine étant dirigée, rapporté à l'axe (28) principal de la direction (18, 20) d'actionnement, sensiblement dans une direction (64) tangentielle, le corps (40) de la soupape étant relié fixement à une partie (36) de palier tubulaire, **caractérisé en ce que** la première partie (32) de sécurisation est disposée à l'extérieur de la partie (36) de palier tubulaire.
